# EUROPEAN PATENT SPECIFICATION

(11) **EP 0 271 173 B1**
(45) Date of publication and mention of the grant of the patent: **13.08.1997**
(21) Application number: 87301966.5
(22) Date of filing: 06.03.1987
(51) Int. Cl.: A01N 59/02

(54) **Methods for facilitating the harvest of food crops**
Verfahren zur Erleichterung der Ernte von Nahrungserträgen
Procédé pour faciliter la moisson des récoltes vivrières

(30) Priority: 10.10.1986 US 918546
(43) Date of publication of application: 15.06.1988
(73) Proprietor: ENTEK CORPORATION, Brea, California 92621 (US)
(72) Inventor: Young, Donald C., Fullerton California 92635 (US)
(74) Representative: Jack, Bruce James

(56) References cited:
- DD-A- 224 480
- US-A- 4 125 396
- US-A- 4 445 925
- US-A- 4 522 644

## Description

This invention relates to methods for desiccating the foliage of food crops and, in particular, to methods for facilitating the harvest of food crops.

A wide variety of food crop plants have abundant foliage which interferes with and increases the cost of crop harvest, particularly with mechanical harvesters. A variety of methods and compositions have been devised to desiccate foliage sufficiently to facilitate harvest. The term "desiccating" is used herein in the agricultural sense which typically means reducing the above-ground biomass sufficiently to reduce interference with harvest rather than in the strict chemical sense of the word. In chemical terminology, desiccation usually connotes removal of water by chemical action. Sugar cane and other crops, the produce of which is not harmed by fire, have been flame-defoliated, although this procedure now is banned in a many areas to control air pollution. A variety of chemical desiccants have been employed to reduce the mass and improve the manageability of crop plant foliage. Illustrative are sodium chlorate, endothall, arsenic acid, and secondary butyl-2,4-dinitrophenol sold as Dinoseb®, Synox®, and under other designations.

Sulfuric acid applied at sufficiently high dosage rates desiccates crop vegetation, but the use of sufficiently strong sulfuric acid at sufficiently high rates presents several significant problems. Sulfuric acid damages the harvestable portion of many crops by oxidation and/or dehydration reactions characteristic of sulfuric acid. Furthermore, sulfuric acid dosage rates required to achieve rapid foliage desiccation are substantial since the acid is consumed by reaction with foliage by oxidation and/or dehydration, and the hazards associated with the use of large volumes of concentrated sulfuric acid are well known and require great care in application, sophisticated, expensive application equipment, and protective personnel clothing and devices. Furthermore, the use of such volumes of sulfuric acid can result in soil over-acidification and ecotoxic effects associated with acid run-off. Other chemical harvesting aids, such as the desiccants mentioned above, also suffer from one or more disadvantages. Several are relatively expensive, and all are potentially toxic. Some are translocated to the harvestable portion of food crops with obvious, undesirable effects. For instance, arsenic acid is very toxic both to plants and the environment and can contaminate both the harvestable food product and the environment. Sodium chlorate results in the addition of both sodium and chlorine to the crop and soil, both of which are undesirable. It is also explosive and difficult to handle. Secondary butyl-2,4-dinitrophenol has been identified, in recent studies, as a carcinogen, oncogen, and teratogen. The relatively slow activity of several of the chemical desiccants is also disadvantageous since it is generally desirable to harvest the crop as soon as possible after preharvest treatment, i.e., within 24 hours or less. However, some harvest aids, such as secondary butyl-2,4-dinitrophenol require days or weeks to desiccate plant foliage sufficiently to facilitate harvest, depending upon the crop type and field conditions. Furthermore, the residual toxicity of several chemical harvest aids prevents entry of personnel into treated fields due to toxic chemical residue on plant foliage.

The desirability of harvesting as soon as possible after preharvest treatment is due to several factors, and potatoes and sugar beets are classic illustrations. In these and other crops, it is preferable to foster productive growth of the crop until harvest. Destruction of plant foliage obviously deters or terminates that process, and the lapse of any significant time between preharvest treatment and harvest results in a proportionate economic loss to the grower and increases the risk of crop spoilage.

Accordingly, a need exists for a nontoxic, fast-acting, relatively inexpensive harvest aid that rapidly desiccates living food crop foliage sufficiently to facilitate harvest.

### SUMMARY OF THE INVENTION

It has now been found that food crop harvest of crops selected from squash, melons, potatoes and combinations thereof can be facilitated by applying to the plant foliage an aqueous solution containing the monourea adduct of sulfuric acid. Such compositions are fast-acting, and they are nontoxic and relatively noncorrosive to personnel, equipment, and the environment in comparison to other preharvest aids. Their application to plant foliage does not result in the translocation of any toxic material to the food product or the persistence of toxic residues on plant foliage or in the environment. On the contrary, their use results in the addition of nutrient nitrogen and sulfur to the soil. In particular, the useful compositions are more active for desiccating plant foliage than is sulfuric acid on an equivalent H₂SO₄ basis, and they are much easier to handle and present much less risk of damage to harvestable plant parts than does sulfuric acid.

### DETAILED DESCRIPTION OF THE INVENTION

Briefly, the invention provides methods for facilitating the harvest of the above specified food crops and for harvesting such crops which involve applying to the foliage of crop plants an aqueous solution containing a combination of urea and sulfuric acid in which the urea/H₂SO₄ molar ratio is within the range of about 1/4 to about 7/4. The methods are particularly useful for facilitating harvest and promoting rapid desiccation of foliage on a tuberous crop that typically have abundant foliage, such as potatoes.

The useful urea-sulfuric acid harvesting aids are aqueous solutions containing a combination of urea and sulfuric acid, in the presence or absence of other components, in which the urea/H₂SO₄ molar ratio is within the range of about 1/4 to about 7/4. These relative proportions of urea and sulfuric acid ensure that at least a portion of the sulfuric acid is present as the monourea adduct of sulfuric acid. We have found that the monourea adduct of sulfuric acid efficiently and rapidly desiccates the foliage on a wide variety of plants and does so in the absence of undesirable reactions such as oxidation and dehydration associated with sulfuric acid which consume the acid per se and can damage the harvestable portion of the crop. The monourea adduct is not present in compositions in which the urea/H₂SO₄ molar ratio is 2 or more. In such compositions, all of the sulfuric acid is present as the diurea adduct. The diurea adduct of sulfuric acid is much less effective than the monourea adduct for promoting foliage desiccate. Accordingly, the claimed compsitions are those in which a higher proportion of the sulfuric acid is present as the monourea adduct, e.g., compositions which have urea/H₂SO₄ molar ratios within the range of about 1/2 to about 3/2, most preferably about 1/1 to about 3/2. In the latter case, all of the sulfuric acid is present as either the mono- or diurea adduct, and at least 50 percent is present as the monourea adduct.

Very minor concentrations of urea and sulfuric acid are capable of producing significant desiccation of plant foliage. Thus, aqueous solutions in which the urea and sulfuric acid, in combination, constitute about 1 weight percent or more of the composition can be employed. Higher concentrations generally promote more rapid desiccation and reduce the risk of solution run-off from plant foliage (and loss of active material). Accordingly, solutions in which the urea and sulfuric acid, in combination, constitute at least about 5 weight percent of the solution are preferred, while solutions containing 10 percent of the combination of urea and sulfuric acid are most preferred, particularly when lower spray volumes are desired. The urea-sulfuric acid component is very soluble in water, and high concentrations can be employed, although high-pressure spray equipment is often required to apply compositions containing more than 50 percent of the urea-sulfuric acid combination due to its relatively high viscosity. Thus, the urea and sulfuric acid, in combination, typically constitute about 5 to about 80 weight percent of the solution.

The urea-sulfuric acid solutions may optionally contain other components which do not negate the desiccating activity of those compositions. Surfactants and solvents other than water increase the activity of these compositions and generally accelerate foliage desiccation under otherwise identical treatment conditions. The presence of surfactants and/or solvents other than water (i.e., in addition to water) is particularly preferred for the treatment of foliage which contains hydrophobic substances such as lignins, waxy cuticle, and/ or fatty materials such as lipids. Illustrative solvents include organic and inorganic solvents in which both urea and sulfuric acid are miscible (in the aqueous solution) such as dimethyl sulfoxide, alcohols, e.g., methanol, glycol, acetone, methylethyl ketone, tetrahydrofuran, and the like. One or more of such solvents can be present over a wide range of concentrations, usually within the range of about 2 to about 95 weight percent based on the combined weight of solvent, urea, sulfuric acid, and water. Illustrative suitable surfactants are discussed in copending European Patent Application No. 86105942.6. Surfactants can also be employed over a wide range of concentrations. Useful concentrations are usually at least about 0.1 and generally about 0.1 to about 10 weight percent surfactant based on the combined weight of surfactant, urea, sulfuric acid, water, and solvent (if present).

The urea-sulfuric acid components can be prepared by any one of the variety of procedures. One suitable procedure for preparing the urea-sulfuric acid components free of thermal decomposition products is disclosed in US-A-4 445 925. The urea-sulfuric acid component can also be obtained by gradually adding urea to sulfuric acid or vice versa, in the presence or absence of water and/or other solvent. Sufficient cooling must be provided to ensure that the urea-sulfuric acid component does not thermally decompose. As disclosed in US-A-4 445 925, the urea-sulfuric acid compositions can be decomposed at temperatures below their explosive decomposition temperature. Significant decomposition begins to occur at about 80°C (176°F). Moreover, such thermal decomposition often results in the formation of undesirable toxic materials such as sulfamic acid and/or ammonium sulfamate which are known herbicides and can impair the quality of the harvested crop. Generally, the presence of such toxic components is not preferred. Moreover, the decomposition of sulfuric acid and urea reduces the concentration of active components in the composition and is further undesirable for that reason.

The described solutions are applied to the foliage of food crop plants prior to harvest at dosage rates sufficient to facilitate harvest by foliage desiccation. Even at very minor dosage rates, these compositions rapidly desiccate foliage to an extent sufficient to significantly reduce foliage interference with the harvesting effort within 48 hours or less. Higher dosage rates can be employed to achieve significant foliage desiccation within 24 hours or less, and essentially complete foliage desiccation can be achieved within 4 hours or less as illustrated in the following examples. Generally, the solutions are applied to the foliage at rates corresponding to at least about 22.5kg/ha (about 20 pounds per acre) based on the combined weight of urea and sulfuric acid. More rapid desiccation is obtained at dosage rates of at least about 56kg/ha (about 50 pounds per acre) while rates of at least about 336kg/ha (about 300 pounds per acre) rapidly desiccate the foliage of essentially all crop varieties. Typically, dosage rates of about 56 to about 560kg/ha (about 50 to about 500 pounds per acre) are sufficient to significantly facilitate crop harvest within 24 hours or less, while rates of 56 to about 336kg/ha (50 to about 300 pounds per acre) rapidly desiccate most food crop foliage.

The optimum combination of solution concentration and dosage rate can be best determined for any combination of food crop and field conditions by treating sample plots of the plant population shortly before harvest with different solutions of varying urea-sulfuric acid component concentration at different dosage rates and selecting the combination of treatment conditions best suited to achieve the desired degree of desiccation in the optimum time.

The aqueous solutions can be applied to the plant foliage with typical agricultural foliage spray apparatus. Spray volume is preferably controlled to effect application of the desired quantity of the urea-sulfuric acid component to the crop foliage without excessive run-off.

The invention is further described by the following examples which are illustrative of specific modes of practicing the invention and are not intended as limiting the scope of the invention.

### EXAMPLE 1

The foliage of potato plants ready for harvest can be desiccated sufficiently to minimize foliage interference with potato harvest by spraying the foliage with 700 litres/ha (75 gallons per acre) of an aqueous solution containing urea and sulfuric acid in which the urea and sulfuric acid, in combination, constitute 25 weight percent of the solution and in which the urea/H₂SO₄ molar ratio is 1.1. Complete foliage desiccation is evident within 4 hours, and the potato crop can be harvested at that time with minimal interference from the plant foliage.

## Claims

1. A method for facilitating the harvest of crops selected from the group consisting of squash, melons, potatoes, and combinations thereof, which comprises applying to the foliage of said crops prior to harvest an amount of an aqueous solution comprising the monourea adduct of sulfuric acid sufficient to substantially reduce interference of said foliage with harvest of said crops.

2. A method for harvesting crops selected from the group consisting of squash, melons, potatoes, and combinations thereof, which comprises applying to the foliage of said crops prior to harvest an amount of an aqueous solution comprising the monourea adduct of sulfuric acid corresponding to at least about 22.5 kg/ha (20 pounds per acre) combined, equivalent urea and sulfuric acid and having an equivalent urea/H₂SO₄ molar ratio within the range of 1/1 to 3/2 sufficient to substantially reduce interference of said foliage with harvest of said crops within 48 hours or less, and harvesting said crops.

3. A method according to claim 1 or 2, wherein said solution is applied to the foliage of said crops at a dosage rate corresponding to at least about 56 kg/ha (50 pounds per acre) combined, equivalent urea and sulfuric acid.

4. A method according to claim 1, 2 or 3, wherein said solution is free of decomposition products of urea and sulfuric acid.

5. A method according to claim 1, 2, 3 or 4, wherein said solution is free of sulfuric acid and ammonium sulfamate.

6. A method according to any one of claims 1 to 5, wherein said solution further comprises a surfactant and/or a solvent other than water.

7. A method according to any one of claims 1 to 6, wherein the equivalent, combined concentration of urea and sulfuric acid in said solution is at least about 5 weight percent, and said solution is applied to said foliage at a dosage rate sufficient to substantially reduce interference of said foliage with harvest of said crops within 24 hours or less.

8. A method according to any one of claims 1 to 7, wherein said solution is applied to said foliage at a rate sufficient to substantially reduce interference of said foliage with harvest of said crops within not more than about 4 hours.

9. A method according to any one of claims 1 to 8, wherein all of the equivalent sulfuric acid in said solution is present as the mono- or diurea adduct of sulfuric acid.

10. A method according to any preceding claim, wherein said crop is harvested within 48 hours or less after said solution is applied.

11. A method according to any preceding claim, wherein said crop is harvested within 24 hours or less after said solution is applied.

12. A method according to claim 1, wherein said solution is applied to said foliage at a dosage rate corresponding to at least 22.5 kg/ha (20 pounds peer acre) combined, equivalent urea and sulfuric acid.

13. A method according to any preceding claim, wherein said crop comprises potatoes.

14. A method according to any preceding claim, wherein said solution is applied to said foliage at a rate sufficient to substantially reduce the interference of said foliage with harvesting of said crop within about 4 hours or less.

## Patentansprüche

1. Ein Verfahren zur Erleichterung der Ernte von Feldfrüchten, die ausgewählt sind aus der Gruppe, die aus Kürbis, Melonen, Kartoffeln und Kombinationen derselben besteht, welches umfaßt, daß auf das Blattwerk besagter Feldfrüchte vor der Ernte eine ausreichende Menge einer wäßrigen Lösung, die das Monoharnstoff-Addukt von Schwefelsäure umfaßt, aufgebracht wird, um die Beeinträchtigung der Ernte besagter Feldfrüchte durch besagtes Blattwerk wesentlich zu verringern.

2. Ein Verfahren zum Ernten von Feldfrüchten, die ausgewählt sind aus der Gruppe, die aus Kürbis, Melonen, Kartoffeln und Kombinationen derselben besteht, welches umfaßt, daß auf das Blattwerk besagter Feldfrüchte vor der Ernte eine Menge einer wäßrigen Lösung, die das Monoharnstoff-Addukt von Schwefelsäure umfaßt, aufgebracht wird, die wenigstens etwa 22,5 kg/ha (20 pounds pro acre) kombinierter, äquivalenter Menge Harnstoff und Schwefelsäure entspricht und ein Molverhältnis äquivalente Menge Harnstoff/H₂SO₄ im Bereich von 1/1 bis 3/2 aufweist, was ausreichend ist, um die Beeinträchtigung der Ernte besagter Feldfrüchte durch besagtes Blattwerk innerhalb von 48 Stunden oder weniger wesentlich zu verringern, und daß besagte Feldfrüchte geerntet werden.

3. Ein Verfahren nach Anspruch 1 oder 2, wobei besagte Lösung auf das Blattwerk besagter Feldfrüchte in einer Dosisrate aufgebracht wird, die wenigstens etwa 56 kg/ha (50 pounds pro acre) kombinierter, äquivalenter Menge Harnstoff und Schwefelsäure entspricht.

4. Ein Verfahren nach Anspruch 1, 2 oder 3, wobei besagte Lösung frei ist von Zersetzungsprodukten von Harnstoff und Schwefelsäure.

5. Ein Verfahren nach Anspruch 1, 2, 3 oder 4, wobei besagte Lösung frei ist von Schwefelsäure und Ammoniumsulfamat.

6. Ein Verfahren nach einem der Ansprüche 1 bis 5, wobei besagte Lösung außerdem eine oberflächenaktive Substanz und/oder ein anderes Lösungsmittel als Wasser umfaßt.

7. Ein Verfahren nach einem der Ansprüche 1 bis 6, wobei die äquivalente, kombinierte Konzentration von Harnstoff und Schwefelsäure in besagter Lösung wenigstens etwa 5 Gewichtsprozent beträgt und besagte Lösung auf besagtes Blattwerk in einer Dosisrate aufgebracht wird, die ausreichend ist, um Beeinträchtigung der Ernte besagter Feldfrüchte durch besagtes Blattwerk innerhalb von 24 Stunden oder weniger wesentlich zu verringern.

8. Ein Verfahren nach einem der Ansprüche 1 bis 7, wobei besagte Lösung auf besagtes Blattwerk in einer Rate aufgebracht wird, die ausreichend ist, um Beeinträchtigung der Ernte besagter Feldfrüchte durch besagtes Blattwerk innerhalb von nicht mehr als etwa 4 Stunden wesentlich zu verringern.

9. Ein Verfahren nach einem der Ansprüche 1 bis 8, wobei die gesamte äquivalente Menge Schwefelsäure in besagter Lösung als das Mono- oder Diharnstoff-Addukt von Schwefelsäure vorliegt.

10. Ein Verfahren nach einem vorangehenden Anspruch, wobei besagte Feldfrucht innerhalb von 48 Stunden oder weniger geerntet wird, nachdem besagte Lösung aufgebracht ist.

11. Ein Verfahren nach einem vorangehenden Anspruch, wobei besagte Feldfrucht innerhalb von 24 Stunden oder weniger geerntet wird, nachdem besagte Lösung aufgebracht ist.

12. Ein Verfahren nach Anspruch 1, wobei besagte Lösung auf besagtes Blattwerk in einer Dosisrate aufgebracht wird, die wenigstens 22,5 kg/ha (20 pounds pro acre) kombinierter, äquivalenter Menge Harnstoff und Schwefelsäure entspricht.

13. Ein Verfahren nach einem vorangehenden Anspruch, wobei besagte Feldfrucht Kartoffeln umfaßt.

14. Ein Verfahren nach einem vorangehenden Anspruch, wobei besagte Lösung auf besagtes Blattwerk in einer Rate aufgebracht wird, die ausreichend ist, um die Beeinträchtigung des Erntens besagter Feldfrucht durch besagtes Blattwerk innerhalb von etwa 4 Stunden oder weniger wesentlich zu verringern.

## Revendications

1. Procédé pour faciliter la moisson de cultures choisies dans le groupe constitué par la courge, las melons, les pommes de terre et combinaisons de ceux-ci, qui comprend l'application sur le feuillage desdites cultures, avant la moisson, d'une quantité d'une solution aqueuse comprenant le produit d'addition de mono-urée et d'acide sulfurique suffisante pour réduire substantiellement l'interférence dudit feuillage avec la moisson desdites cultures.

2. Procédé pour moissonner des cultures choisies dans le groupe constitué par la courge, les melons, les pommes de terre et combinaisons de ceux-ci, qui comprend l'application, sur le feuillage desdites cultures, avant la moisson, d'une quantité d'une solution aqueuse comprenant le produit d'addition de mono-urée et d'acide sulfurique correspondant à au moins environ 22,5 kg/ha (20 livres par acre) d'urée et d'acide sulfurique équivalents combinés et ayant un rapport molaire urée/H₂SO₄ équivalent dans la gamme de 1/1 à 3/2, suffisante pour réduire substantiellement l'interférence dudit feuillage avec la moisson desdites cultures en l'espace de 48 heures ou moins, et la moisson desdites cultures.

3. Procédé selon la revendication 1 ou 2, dans lequel ladite solution est appliquée sur le feuillage desdites cultures à un taux de dose correspondant à au moins environ 56 kg/ha (50 livres par acre) durée et d'acide sulfurique équivalents combinés.

4. Procédé selon la revendication 1, 2 ou 3, dans lequel ladite solution est exempte de produits de décomposition d'urée et d'acide sulfurique.

5. Procédé selon la revendication 1, 2, 3 ou 4, dans lequel ladite solution est exempte d'acide sulfurique et de sulfamate d'ammonium.

6. Procédé selon l'une quelconque des revendications 1 à 5, dans lequel ladite solution comprend en outre un agent tensioactif et/ou un solvant autre que l'eau.

7. Procédé selon l'une quelconque des revendications 1 à 6, dans lequel la concentration équivalente combinée d'urée et d'acide sulfurique dans ladite solution est d'au moins environ 5 % en poids, et ladite solution est appliquée sur ledit feuillage à un taux de dose suffisant pour réduire substantiellement l'interférence dudit feuillage avec la moisson desdites cultures en l'espace de 24 heures ou moins.

8. Procédé selon l'une quelconque des revendications 1 à 7, dans lequel ladite solution est appliquée sur ledit feuillage à un taux suffisant pour réduire substantiellement l'interférence dudit feuillage avec la moisson desdites cultures en l'espace de pas plus d'environ 4 heures.

9. Procédé selon l'une quelconque des revendications 1 à 8, dans lequel tout l'acide sulfurique équivalent dans ladite solution est présent sous la forme du produit d'addition de mono- ou di-urée et d'acide sulfurique.

10. Procédé selon l'une quelconque des revendications précédentes, dans lequel ladite culture est moissonnée dans les 48 heures ou moins après l'application de ladite solution.

11. Procédé selon l'une quelconque des revendications précédentes, dans lequel ladite culture est moissonnée dans les 24 heures ou moins après l'application de ladite solution.

12. Procédé selon la revendication 1, dans lequel ladite solution est appliquée sur ledit feuillage à un taux de dose correspondant à au moins 22,5 kg/ha (20 livres par acre) d'urée et d'acide sulfurique équivalents combinés.

13. Procédé selon l'une quelconque des revendications précédentes, dans lequel ladite culture comprend des pommes de terre.

14. Procédé selon l'une quelconque des revendications précédentes, dans lequel ladite solution est appliquée sur ledit feuillage à un taux suffisant pour réduire substantiellement l'interférence dudit feuillage avec la moisson de ladite culture an l'espace d'environ 4 heures ou moins.
